# EUROPEAN PATENT SPECIFICATION

(11) **EP 1 528 716 B1**
(45) Date of publication and mention of the grant of the patent: **14.10.2009**
(21) Application number: 03783903.2
(22) Date of filing: 08.08.2003
(51) Int. Cl.: H04L 12/28

(54) **FLOW CONTROL METHOD OF DATA SERVICE TRANSMISSION IN SDH NETWORK**
FLUSSKONTROLLVERFAHREN FÜR DIE ÜBERTRAGUNG VON DATENDIENSTEN IN EINEM SDH-NETZ
PROCEDE DE COMMANDE DE FLUX POUR LA TRANSMISSION DE SERVICES DE DONNEES DANS UN RESEAU SDH

(30) Priority: 10.08.2002 CN 02130031
(43) Date of publication of application: 04.05.2005
(73) Proprietor: Huawei Technologies Co., Ltd., Shenzhen, Guangdong 518057 (CN)
(72) Inventor: LI, Kun; Intellectual Property Department, Shenzhen Guangdong 518057 (CN); LI, Fenglin; Intellectual Property Department, Shenzhen Guangdong 518057 (CN); HUANG, Ke; Intellectual Property Department, Shenzhen Guangdong 518057 (CN); DENG, Yongjun; Intellectual Property Department, Shenzhen Guangdong 518057 (CN)
(74) Representative: Körber, Martin Hans
(86) International application number: PCT/CN2003/000643
(87) International publication number: WO 2004/015923

(56) References cited:
- EP-A- 1 006 751
- EP-A2- 1 006 751
- WO-A1-01/31970
- CN-A- 1 333 965
- CN-A- 1 353 367
- US-A1- 2001 043 603
- XIN LI ET AL: "Encapsulation and rate adaptation for ethernet over sdh" COMMUNICATIONS, CIRCUITS AND SYSTEMS AND WEST SINO EXPOSITIONS, IEEE 2002 INTERNATIONAL CONFERENCE ON JUNE 29 - JULY 1, 2002, PISCATAWAY, NJ, USA,IEEE, vol. 2, 29 June 2002 (2002-06-29), pages 1301-1305, XP010631763 ISBN: 0-7803-7547-5
- SGI G ET AL: "SDH virtual concatenation technique used in ethernet data transport" COMMUNICATIONS, CIRCUITS AND SYSTEMS AND WEST SINO EXPOSITIONS, IEEE 2002 INTERNATIONAL CONFERENCE ON JUNE 29 - JULY 1, 2002, PISCATAWAY, NJ, USA,IEEE, vol. 2, 29 June 2002 (2002-06-29), pages 1784-1787, XP010631865 ISBN: 0-7803-7547-5
- PALNATI P.; LEONARDI E.; GERLA M.: 'Bidirectional shufflenet: a multihop topology for backpressure flow control' COMPUTER COMMUNICATIONS AND NETWORKS 20 September 1995, LOS ALAMITOS, CA, USA, IEEE COMPUT. SOC, US, pages 74 - 81, XP010200308
- KAROL M.; GOLESTANI S.J.; LEE D.: 'Prevention of deadlocks and livelocks in lossless, backpressured packet networks' INFOCOM 2000. NINETEENTH ANNUAL JOINT CONFERENCE OF THE IEEE COMPUTER AND COMMUNICATIONS SOCIETIES vol. 3, 26 March 2000, PISCATAWAY, NJ, USA,IEEE, US, pages 1333 - 1342, XP010376069
- ANDREW TANENBAUM: 'Computer Networks' COMPUTER NETWORKS 01 January 1996, LONDON : PRENTICE-HALL INTERNATIONAL; GB, pages 345 - 403, XP002155220

## Description

### Field of the Invention

The present invention relates to data transmission, particularly to a flow-control method for data traffic transmitted through Synchronous Digital Hierarchy (SDH) network.

### Background of the Invention

As SDH network evolves rapidly, EoS (Ethernet over SDH/SONET) technology is used more and more widely; therefore, how to implement data applications through SDH network efficiently becomes a crucial issue. In Ethernet transmission applications through Metropolitan Area Network (MAN), the distance between two sites can reach 1-2 hundred km, and virtual cascaded mapping pattern for EoS, so the time delay of data transmission between two sites may be as high as several milliseconds or even tens of milliseconds. In addition, Ethernet traffic has outburst feature, i.e., instantaneous flow rate maybe very large, therefore the instantaneous flow rate may even exceed the pre-assigned bandwidth.

Presently, a common flow-control mechanism is CAR (Committed Access Rate), i.e., in case of network congestion, the data beyond the CAR will be discarded by using priority or others like. A disadvantage of the control mechanism is that it often results in severe packet loss, which will severely degrade network performance in common TCP/IP applications; especially for the TCP/IP protocol that is extensively used, packet loss will result in severely degraded application performance. For example, suppose 10M/b Ethernet devices are used in a TCP application and the AckTime is set as 5s, Frame Loss Ratio (FLR) 1% will result in serviceability degraded by 98% for 1,500-Byte Ethernet frames.

In some network transmission casesEoS devices, the PAUSE frames generated at a user data device are transferred to the opposite user data device; however, such data transmission is only suitable for short distance instead of long distance because the transmission device only transfers PAUSE frames and doesn't generate flow-control information; in addition, if the device at either end doesn't support PAUSE frames, said method can't be used.

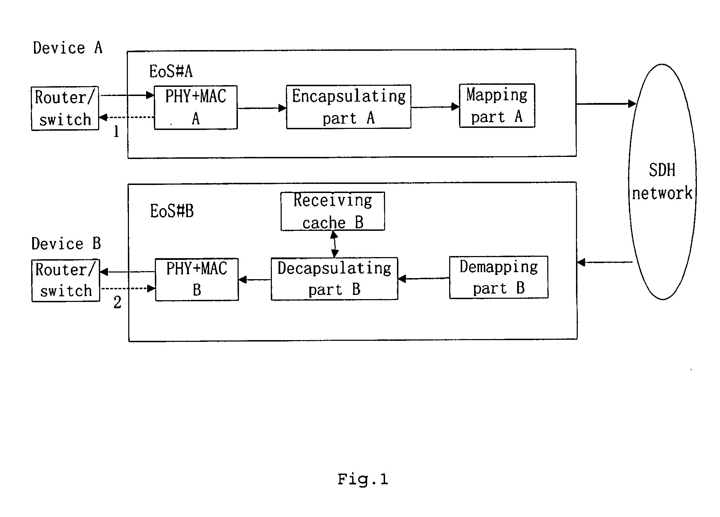

As shown in Fig.1, the EoS device comprises 3 parts: Ethernet access parts, which comprise Physical Layer (PHY) and Media Access Control (MAC); encapsulating and decapsulating parts, the encapsulation may be LAPS (Link Access Protocol-SDH), HDLC (High Level Data Link Control), or GFP (General Framing Procedure), and mapping and demapping parts, the mapping method may be virtual cascading or cascading.

Suppose the bandwidth of SDH network is 1 VC3 (i.e., 45M), if the data transmitting rate of user data device A exceeds 1 VC3, the residue Ethernet frames are stacked at the encapsulating part A because the flow at Mapping part A is constant (1 VC3) according to the prior art; when the cache of encapsulating part A is used up, the data in MAC A can't be sent to encapsulating part A any more; therefore, if Ethernet flow control is enabled, PHY+MAC A will send PAUSE frames (full duplex) or back pressure (half duplex) to user device, shown as the dotted line 1 in Fig.1 (if Ethernet flow control is disabled, MAC A will discard the residue Ethernet frames, referring to IEEE802.3x document for Ethernet flow control), as a result, the transmitting speed of device A will be decreased to below 1 VC3 to prevent packet loss and severely degraded network performance.

If the transmitting speed of device A is lower than 1 VC3 but the receiving speed of device B is less than the transmitting speed of device A due to certain reasons (for example, device B is attached with a plurality of 10M devices but only one of them is working), the traffic from device A to the transmitting end of EoS device B will not be blocked, instead, device B will be blocked; thus, according to the specification in 802.3x, device B will send 802.3x flow-control information (may be PAUSE frames or back pressure signals) to ports, which is directly connected to it (i.e. , the dotted line 2 in Fig.1); according to the specification in 802.3x, the flow-control information will be terminated by MAC B; at the same time, MAC B will stop sending data to device B and the data will not be transferred to device A device A continues sending data at original speed, thus the Ethernet frames from device A stack up at the decapsulating part B or MAC B; when the caches at these positions are used up, packet loss will surely occur at EoS #B; therefore, though both device A and device B are 802.3x Ethernet flow control-supporting devices, packet loss is inevitable after the EoS device. It indicates that traditional 802.3x-based technical solution is unable to ensure Ethernet flow control with EoS devices.

European patent application EP1006751A discloses a receiver for controlling flow of frame based data, received from a synchronous digital network, to a frame based data channel interface. The receiver is configured to receive the frame based data at a first rate whereafter a buffer is configured to receive the frame based data. Upon pre-determining a data amount threshold level for the buffer, an amount of frame based data received is monitored with respect to the threshold level..In response to monitoring the amount of data received, a signal is generated in the form of a pause frame, wherein the pause frame signal is configurable to adapt the first transmission rate of the frame based data over the synchronous digital network to a second rate.

Also, The article "Encapsulation and Rate Adaptation for Ethernet Over. SDH", XIN LI ET AL, COMMUNICATIONS, CIRCUITS AND SYSTEMS AND WEST SINO EXPOSITIONS, IEEE 2002 INTERNATIONAL CONFERENCE ON JUNE 29-JULY 1, 2002, NJ, USA, IEEE, vol.2, 29 June 2002, pages 1301-1305, XP 010631763 ISBN:0-7803-7547-5 discloses a chip architecture for Ethernet transmission over SDH, wherein Ethernet traffic must be first encapsulated into frames and then mapped into expected SDH payloads.

### Summary of the Invention

The object of the present invention is to provide a high-performance flow-control method for data traffic transmitted through SDH network to realize lossless transparent transmission of Ethernet data through SDH network.

According to the present invention, a flow-control method for data traffic transmitted through SDH network comprises the following steps:
during data transmission through the SDH network, a decapsulating part of an EoS device monitoring data volume in a frame cache inside the EoS device, and if the data volume exceeds an upper threshold of the frame cache, creating a Line Flow-Control Protocol, LFP, frame with a control field which controls to stop sending data, and if the data volume is lower than a lower threshold of the frame cache, creating an LFP frame with a control field which controls to start sending data;
an encapsulating part of the EoS device encapsulating the LFP frame;
the LFP frame being mapped to SDH payload as common data frame and transferred to an opposite EoS device;
the opposite EoS device demapping the SDH payload, and the decapsulating part of the opposite EoS device identifying the LFP frame and interpreting and executing flow control information in the LFP frame, wherein LFP transparent pattern is used when the decapsulating part identifies and processes the LFP frame; the decapsulating part of the opposite EoS device interprets and executes the LFP frame according to whether a user data device attached to the opposite EoS device supports full duplex;
if the user data device attached to the opposite EoS device works in full duplex mode, it is unnecessary to interpret the LFP frame, instead, the LFP frame will be sent to the user data device directly;
if the user data device attached to the opposite EoS device works in half duplex mode, the control field of the LFP frame will be interpreted, and if the control field in the LFP frame controls to start sending data, a back pressure control signal will be canceled; otherwise the back pressure control signal will be sent to make the user data devices attached to the opposite EoS device detect a conflict and thus stop transmitting data.

The step of creating the LFP frame further comprises the following steps:
in uplink direction of the EoS device, the decapsulating part
of the EoS device keeping on monitoring the data volume in the frame cache, if the data volume exceeds the upper threshold, the decapsulating part of the EoS device periodically creating the LFP frame, the control field of which controls to stop sending data; if the data volume is lower than the lower threshold, the decapsulating part of the EoS device periodically creating the LFP frame, the control field of which controls to start sending data; if the data volume is between the lower threshold and the upper threshold, the decapsulating part of the EoS device stops creating the LFP frame;the LFP frame is inserted in the head of the data queue to be encapsulated and is given the priority to encapsulate; if no Ethernet frames are being encapsulated, the LFP frame is encapsulated immediately; otherwise the LFP frame is encapsulated immediately after the current Ethernet frames are encapsulated.

The carrier of the LFP frame can be configured as standard PAUSE frame structure defined by 802.3x.

The advantage of the present invention is: through LFP frames, flow control information is transferred between EoS devices through the SDH network; the transmission devices generate LFP frames and transfer network flow control information between each other so as to achieve lossless transmission of outburst Ethernet data in the SDH network that transmit data periodically, in order to significantly enhance the performance of data applications. The present invention enables transmission of flow control information between EoS devices and also support full duplex or half duplex devices attached to EoS devices, for example, a full duplex device may be attached to one end of the EoS device, and a half duplex device may be attached to the other end of the EoS device, or half duplex devices may be attached to both ends of the EoS device; The EoS processing device keeps on monitoring the data volume in the cache to avoid flow control failure due to some reasons such as LFP frame transmission failures; therefore, the present invention is a high-performance method for flow control for network information and has high applicability and reliability.

### Brief Description of the Drawings

Fig.1 is a schematic diagram of flow control implemented according to the prior art.
Fig.2 is a schematic diagram of LFP process according to the present invention.

### Detailed Description of the Embodiments

The present invention will be described in further detail with reference to the following embodiments and the drawings. The present invention will be described with the example of A-B data transmission; the processing method for B-A data transmission is similar.

In the present invention, during the data transmission through SDH network, the EoS devices transfer flow-control information through LFP frames between them; the carrier of LFP frames can be configured as standard PAUSE frame structure defined by 802.3x.

During SDH mapping, the mapping part of EoS device processes both Ethernet frames and LFP frames as common data frames; the control field of said LFP frames is 0x0FFFFH or 0x0H and is controlled in a Xon/Xoff control way.

In addition, because time delay will be generated during LFP frame transmission, appropriate caches are required to compensate the time delay; the LFP frames are implemented on the basis of in-band management, i.e., LFP frames and common Ethernet data frames are transferred through the same transmission paths.

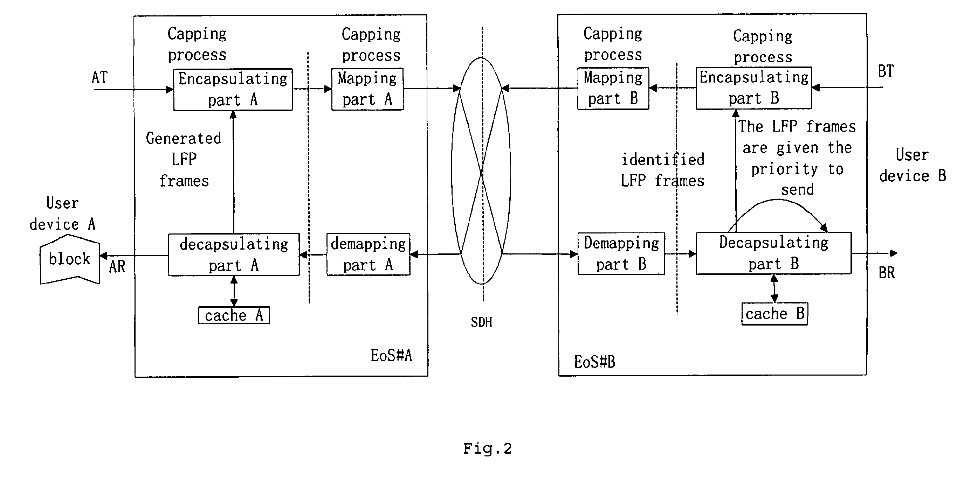

As shown in Fig.2, in the uplink direction, i.e., the system direction, e.g., the direction of EoS#A - SDH network in Fig.2, take an example for EoS#A, the decapsulating part of the EoS processing device, according to the lower/upper threshold of frame cache (reflecting utilization of cache), will generate LFP frames, the control field of which is 0x0FFFFH or 0x0H; said LFP frames are processed as common Ethernet data frames in the mapping part of the EoS processing device; however, to enhance the performance of LFP, the priority is given to the LFP frames to send to the mapping part of the EoS processing device; in the downlink direction i.e., the direction to user device, e.g., the direction of SDH - EoS#B in Fig.2, the decapsulating part of the EoS processing device identifies the LFP frames; if the LFP frames are detected, it interprets and executes the LFP frames to achieve LFP.

If the receiving end (i.e., "AR" shown in Fig.2) of user device attached to EoS#A is blocked, the data volume in cache A will increase because the demapping part A continues working normally; when the data volume reaches the preset upper threshold, the decapsulating part A will generate LFP frames, the control field of which is 0x0FFFFH, and said LFP frames are inserted in the head of data queue at the encapsulating part A and is given the priority to encapsulate. The process is: if there is no Ethernet frames being encapsulated at the encapsulating part A, said LFP frames will be encapsulated immediately; otherwise said LFP frames will be encapsulated immediately after the current Ethernet frame is encapsulated; then the encapsulated LFP frames will be mapped, transferred from the SDH network and the demapping part B to the decapsulating part B, which identifies the LFP frames and processes it in either of the following ways:
1. LFP transparent: This way is suitable for the case in which the network delay is small and the distance between two sites is short. In this way, the decapsulating part B will interpret and execute the LFP frames according to the characteristic of the data device (full duplex or half duplex) attached to it.
   If the user device attached to the EoS device works in full duplex mode, the LFP frames will not be interpreted, instead, the LFP frames will be directly transferred to the user data device B; the detailed process is: if the decapsulating part B isn't sending data to the Ethernet access part BR, it will send the LFP frames immediately to the Ethernet access part BR; otherwise it will send the LFP frames immediately after the current Ethernet data is sent, in this case, the LFP frames will not pass through cache B in order to enhance its performance.
   If the user data device attached to the EoS device works in half duplex mode, the control field of the LFP frames should be interpreted, i.e., if it is 0x0H, the back pressure control signal will be canceled; otherwise the back pressure control signal will be sent to make the user device B attached to EoS#B detect a conflict and thus stop transmitting data to the encapsulating part B.
2. LFP Regeneration: The decapsulating part B interprets and executes the LFP frames; if the control field of the LFP frames is not 0x0H, i.e., LFP disabled, the encapsulating part B will stop working, i.e., it stops receiving data from Ethernet access part BT; if the LFP frames are generated by the decapsulating part B itself, the LFP frames will be sent to the mapping part B via the encapsulating part B. Thus the data from Ethernet access part BT will stack up at the encapsulating part B and will finally cause the user device B stopping sending Ethernet frames according to 802.3x Ethernet flow control protocol, i.e., no data will be transmitted to BT; if the control field of the LFP frames is 0x0H, i.e., LFP enabled, the encapsulating part B will work normally, and encapsulate and send Ethernet frames from the Ethernet access part BT to the mapping part B.

In this mode, the devices attached to EoS devices at both ends of the SDH network are not required to work in full duplex; instead, they are only required to support standard 802.3x flow control operation. That is to say, the user device at one end may work in full duplex mode while the device at the other end may work in half duplex mode; or the devices at both ends may work in half duplex mode.

After the user device B attached to EoS#B stops sending data to EoS#B, i.e., there is no Ethernet frame input at BT, the data volume in cache A of EoS#A will be reduced gradually; when the data volume reaches to the lower threshold, the decapsulating part A will generate LFP frames, the control field of which is 0x0H; said LFP frames are given the priority to send to the decapsulating part B in EoS#B and is interpreted and executed; as a result, the user device B attached to EoS#B will send data again.

In order to avoid LFP control failure due to accidents such as LFP frame transmission failures, the EoS processing device keeps on monitoring the data volume in the cache; when the data volume exceeds the upper threshold or is lower than the lower threshold, the EoS processing device will periodically send LFP frames with corresponding control field; if the data volume is between the upper threshold and the lower threshold, the EoS processing device will stop sending LFP frames; if the data volume exceeds the upper threshold, it will periodically send LFP frames, the control field of which is 0x0FFFFH; if the data volume is lower than the lower threshold, it will periodically send LFP frames, the control field of which is 0x0H.

The lower, upper thresholds and time intervals are configurable, and the time intervals may be different to each other. It is recommended that the time interval for resending LFP frames with the control field 0x0FFFFH should not be too long and the time interval for resending LFP frames with the control field 0x0H should not be too short, so as to avoid excessive occupation of available bandwidth.

Presently, the format of LFP frames is identical to that of standard 802.3x PAUSE frame in order to simplify LFP frame transparent scheme; however, other formats may also be acceptable if corresponding format conversion at the receiving end is performed; as for LFP frame regeneration scheme, format conversion is unnecessary because the LFP frames are only transferred between EoS devices.

The present invention is also applicable to SONET network, and the principle and control process are similar. So the case in which the present invention is applied to SONET network will not be described here.

## Claims

1. A flow-control method for data traffic transmitted through Synchronous Digital Hierarchy, SDH, network, comprising the following steps:
during data transmission through the SDH network, a decapsulating part of an Ethernet over SDH/SONET, EoS, device monitoring data volume in a frame cache inside the EoS device, and if the data volume exceeds an upper threshold of the frame cache, creating a Line Flow-Control Protocol, LFP, frame with a control field which controls to stop sending data, and if the data volume is lower than a lower threshold of the frame cache, creating an LFP frame with a control field controls to start sending data;
an encapsulating part of the EoS device encapsulating the LFP frame;
the LFP frame being mapped to SDH payload as common data frame and transferred to an opposite EoS device;
the opposite EoS device demapping the SDH payload, and the decapsulating part of the opposite EoS device identifying the LFP frame and interpreting and executing flow control information in the LFP frame; **characterized in that**
LFP transparent pattern is used when the decapsulating part identifies and processes the LFP frame; the decapsulating part of the opposite EoS device interprets and executes the LFP frame according to whether a user data device attached to the opposite EoS device supports full duplex;
if the user data device attached to the opposite EoS device works in full duplex mode, it is unnecessary to interpret the LFP frame, instead, the LFP frame will be sent to the user data device directly;
if the user data device attached to the opposite EoS device works in half duplex mode, the control field of the LFP frame will be interpreted, and if the control field in the LFP frame controls to start sending data, a back pressure control signal will be canceled; otherwise the back pressure control signal will be sent to make the user data devices attached to the opposite EoS device detect a conflict and thus stop transmitting data.

2. A flow-control method for data traffic transmitted through SDH network according to claim 1, wherein the step of creating the LFP frame further comprises the following steps:
in uplink direction of the EoS device, the decapsulating part of the.EoS device keeping on monitoring the data volume in the frame cache, if the data volume exceeds the upper threshold, the decapsulating part of the EoS device periodically creating the LFP frame, the control field of which controls to stop sending data; if the data volume is lower than the lower threshold, the decapsulating part of the EoS device periodically creating the LFP frame, the control field of which controls to start sending data; if the data volume is between the lower threshold and the upper threshold, the decapsulating part of the EoS device stops creating the LFP frame;
the LFP frame being inserted in the head of the data queue to be encapsulated and being given the priority to encapsulate; if no Ethernet frames are being encapsulated, the LFP frame being encapsulated immediately; otherwise the LFP frame being encapsulated immediately after the current Ethernet frames are encapsulated.

3. A flow-control method for data traffic transmitted through SDH network according to claim 1 or 2, wherein the carrier of LFP frame is configured as standard PAUSE frame structure defined by 802.3x.

4. A flow-control method for data traffic transmitted through SDH network according to claim 2, wherein if the data volume in the frame cache exceeds the upper threshold, the decapsulating part of the EoS device will periodically create the LFP frame with the control field 0x0FFFFH; if the data volume is lower than the lower threshold, the decapsulating part of the EoS device will periodically create the LFP frame with the control field 0x0H; the control field is controlled in a Xon/Xoff control way.

5. A flow-control method for data traffic transmitted through SDH network according to claim 1, wherein the decapsulating part of the opposite EoS device processes the LFP frame in a LFP frame regeneration pattern:
if the control field in the LFP frame controls to stop sending data, an encapsulating part of the opposite EoS device will stop working, and data from a Ethernet access part of the opposite EoS device will stack up at the encapsulating part of the opposite EoS device and cause a user data device to stop sending Ethernet frames according to 802.3x Ethernet flow control protocol;
if the control field in the LFP frame controls to start sending data, the encapsulating part of the opposite EoS device will work normally to encapsulate the Ethernet frames from the Ethernet access part of the opposite EoS device and forward them to a mapping part of the opposite EoS device.

6. A flow-control method for data traffic transmitted through SDH network according to any preceding claim, wherein when the user data devices attached to the opposite EoS device stops sending data to the opposite EoS device, the data volume in the frame cache of the EoS device will be reduced gradually; when the data volume reaches the lower threshold, the decapsulating part of the EoS device generates the LFP frame with the control field which controls to start sending data; the LFP frame is given priority to send to the decapsulating part of the opposite EoS device, and is interpreted and executed so as to make the user data device attached to the opposite EoS device send data again.

## Patentansprüche

1. Flusskontrollverfahren für Datenverkehr, der durch ein Synchron-Digital-Hierarchie-Netzwerk, SDH-Netzwerk, übertragen wird, umfassend die folgenden Schritte:
während der Datenübertragung durch das SDH-Netzwerk, Überwachen mittels eines Entkapselungsabschnitts einer Ethernet-über-SDH/SONET-Vorrichtung, EoS-Vorrichtung von Datenvolumen in einem Frame Cache innerhalb der EoS-Vorrichtung, und, falls das Datenvolumen einen oberen Grenzwert des Frame Caches übersteigt, Erzeugen eines Verbindungs-Flusskontroll-Protokoll-Rahmens, LFP-Frame, mit einem Kontrollfeld, das das Unterbrechen des Datenübersendens steuert, und, falls das Datenvolumen geringer ist als ein unterer Grenzwert des Frame Caches, Schaffen eines LFP-Frames mit einem Kontrollfeld, das das Beginnen des Übersendens von Daten steuert;
wobei ein Kapselungsabschnitt der EoS-Vorrichtung den LFP-Frame kapselt;
wobei der LFP-Frame in der SDH-Nutzinformation als gemeinsamer Daten-Frame aufgenommen und an eine gegenüberliegende EoS-Vorrichtung übertragen wird;
wobei die gegenüberliegende EoS-Vorrichtung die SDH-Nutzinformation abgibt und der Entkapselungsabschnitt der gegenüberliegenden EoS-Vorrichtung den LFP-Frame identifiziert und Steuerinformationen in dem LFP-Frame interpretiert und ausführt, **dadurch gekennzeichnet, dass**
das LFP-Transparentmuster verwendet wird, wenn der Entkapselungsabschnitt den LFP-Frame identifiziert und ausführt, wobei der Entkapselungsabschnitt der gegenüberliegenden EoS-Vorrichtung den LFP-Frame entsprechend dem interpretiert und ausführt, ob eine Benutzerdatenvorrichtung mit der gegenüberliegenden EoS-Vorrichtung verbunden ist und Vollduplex unterstützt; falls die Benutzerdatenvorrichtung, die mit der gegenüberliegenden EoS-Vorrichtung verbunden ist, nach dem Vollduplex-Modus arbeitet, ist es unnötig, den LFP-Frame zu interpretieren, stattdessen wird der LFP-Frame an die Benutzerdatenvorrichtung direkt gesendet werden;
falls die Benutzerdatenvorrichtung, die mit der gegenüberliegenden EoS-Vorrichtung verbunden ist, nach dem Halbduplex-Modus arbeitet, wird das Kontrollfeld des LFP-Frames interpretiert werden, und falls das Kontrollfeld in dem LFP-Frame den Beginn des Übersendens von Daten steuert, wird ein Back Pressure-Steuerungssignal aufgehoben, andernfalls wird das Back Pressure-Steuerungssignal gesendet, um zu bewirken, dass die Benutzerdatenvorrichtung, die mit der gegenüberliegenden EoS-Vorrichtung verbunden ist, eine Störung detektiert und daher das Übertragen von Daten unterbricht.

2. Flusskontrollverfahren für Datenverkehr, der über ein SDH-Netzwerk übertragen wird, nach Anspruch 1, wobei der Schritt des Schaffens des LFP-Frames ferner die folgenden Schritte umfasst:
Aufrechterhalten des Überwachens des Datenvolumens in dem Frame-Cache durch den Entkapselungsabschnitt der EoS-Vorrichtung in Uplink-Richtung der EoS-Vorrichtung, falls das Datenvolumen den oberen Grenzwert überschreitet, durch den Entkapselungsabschnitt der EoS-Vorrichtung periodisch Erzeugen des LFP-Frames, dessen Kontrollfeld das Unterbrechen des Sendens von Daten steuert; falls das Datenvolumen geringer ist als der untere Grenzwert, periodisch Erzeugen des LFP-Frames durch den Entkapselungsabschnitt der EoS-Vorrichtung, dessen Kontrollfeld das Starten des Übersendens von Daten steuert; falls das Datenvolumen zwischen dem unteren Grenzwert und dem oberen Grenzwert liegt, Unterbrechen des Erzeugens des LFP-Frames durch den Entkapselungsabschnitt der EoS-Vorrichtung;
wobei der LFP-Frame in den Anfang der zu verkapselnden Datenreihe eingefügt wird, und wobei ihm bezüglich des Verkapselns Priorität beigemessen wird; falls keine Ethernet-Frames verkapselt werden, wird der LFP-Frame sofort verkapselt, andernfalls wird der LFP-Frame sofort verkapselt, nachdem die laufenden Ethernet-Frames verkapselt sind.

3. Flusskontrollverfahren für Datenverkehr, der über ein SDH-Netzwerk übertragen wird, nach Anspruch 1 oder 2, wobei der Träger des LFP-Frames konfiguriert ist als Standard-PAUSE-Frame-Struktur, definiert als 802.3x.

4. Flusskontrollverfahren für Datenverkehr, der über ein SDH-Netzwerk übertragen wird, nach Anspruch 2, wobei, falls das Datenvolumen in dem Frame Cache den oberen Grenzwert überschreitet, der Entkapselungsabschnitt der EoS-Vorrichtung periodisch den LFP-Frame mit dem Kontrollfeld 0x0FFFFH schaffen wird, falls das Datenvolumen geringer ist als der untere Grenzwert, wird der Entkapselungsabschnitt der EoS-Vorrichtung periodisch den LFP-Frame mit dem Kontrollfeld 0x0H geschaffen; das Kontrollfeld wird nach einer Xon/Xoff-Steuerung gesteuert.

5. Flusskontrollverfahren für Datenverkehr, der über ein SDH-Netzwerk übertragen wird, nach Anspruch 1, wobei der Entkapselungsabschnitt der gegenüberliegenden EoS-Vorrichtung den LFP-Frame in einem LFP-Frame-Regenerationsmuster ausführt:
Falls das Kontrollfeld in dem LFP-Frame das Unterbrechen des Sendens von Daten steuert, wird ein Verkapselungsabschnitt der gegenüberliegenden EoS-Vorrichtung aufhören zu arbeiten und die Daten von einem Ethernet-Zugangsabschnitts der gegenüberliegenden EoS-Vorrichtung werden sich an dem Entkapselungsabschnitt der gegenüberliegenden EoS-Vorrichtung anstauen und eine Benutzerdatenvorrichtung veranlassen, das Übersenden von Ethernet-Frames gemäß einem 802.3x Ethernet Flusskontroll-Protokoll zu unterbrechen; falls das Kontrollfeld in dem LFP-Frame das Starten des Übersendens von Daten steuert, wird der Verkapselungsabschnitt der gegenüberliegenden EoS-Vorrichtung normal arbeiten, um die Ethernet-Frames von dem Ethernet-Zugangsabschnitt der gegenüberliegenden EoS-Vorrichtung zu verkapseln, und diese zu einem Aufnahmeabschnitt der gegenüberliegenden EoS-Vorrichtung weiterleiten.

6. Flusskontrollverfahren für Datenverkehr, der über ein SDH-Netzwerk übertragen wird, nach irgendeinem der vorstehenden Ansprüche, wobei, wenn die Benutzerdatenvorrichtungen, die mit der gegenüberliegenden EoS-Vorrichtung verbunden sind, das Übersenden von Daten an die gegenüberliegende EoS-Vorrichtung unterbrechen, das Datenvolumen in dem Frame Cache der EoS-Vorrichtung stufenweise verringert wird; falls das Datenvolumen den unteren Grenzwert erreicht, erzeugt der Entkapselungsabschnitt der EoS-Vorrichtung den LFP-Frame mit dem Kontrollfeld, der das Starten des Übersendens von Daten steuert, wobei dem LFP-Frame Priorität gegeben wird, um zu dem Entkapselungsabschnitt der gegenüberliegenden EoS-Vorrichtung zu senden, und er wird interpretiert und ausgeführt, um zu bewirken, dass die Benutzerdatenvorrichtung, die mit der gegenüberliegenden EoS-Vorrichtung verbunden ist, erneut Daten sendet.

## Revendications

1. Procédé de commande de flux pour un trafic de données transmis à travers un réseau SDH, Synchronous Digital Hierarchy, comprenant les étapes suivantes:
pendant la transmission de données à travers le réseau SDH, une partie de désencapsulation d'un dispositif, EoS, Ethernet sur SDH/SONET surveille un volume de données dans une mémoire cache de trame à l'intérieur du dispositif EoS, et, si le volume de données dépasse un seuil supérieur de la mémoire cache de trame, crée une trame LFP, Line Flow-Control Protocol, avec un champ de commande qui commande l'arrêt de l'envoi des données, et, si le volume de données est inférieur à un seuil inférieur de la mémoire cache de trame, crée une trame LFP avec un champ de commande pour commander le commencement de l'envoi des données;
une partie d'encapsulation du dispositif EoS encapsule la trame LFP;
la trame LFP est mappée vers une charge utile SDH en tant que trame de données commune et transférée à un dispositif EoS opposé;
le dispositif EoS opposé démappe la charge utile SDH, et la partie de désencapsulation du dispositif EoS opposé identifie la trame LFP et interprète et exécute les informations de commande de flux de la trame LFP;
**caractérisé en ce que**
un motif transparent pour le LFP est utilisé lorsque la partie de désencapsulation identifie et traite la trame LFP; la partie de désencapsulation du dispositif EoS opposé interprète et exécute la trame LFP selon qu'un dispositif de données d'utilisateur associé au dispositif EoS opposé prend en charge ou non un mode duplex intégral;
si le dispositif de données d'utilisateur associé au dispositif EoS opposé fonctionne dans un mode duplex intégral, il est inutile d'interpréter la trame LFP, au lieu de cela, la trame LFP sera envoyée directement au dispositif de données d'utilisateur;
si le dispositif de données d'utilisateur associé au dispositif EoS opposé fonctionne dans un mode semi-duplex, le champ de commande de la trame LFP sera interprété, et si le champ de commande de la trame LFP commande le commencement de l'envoi des données, un signal de commande de contre-pression sera annulé; autrement, le signal de commande de contre-pression sera envoyé pour amener les dispositifs de données d'utilisateur associés au dispositif EoS opposé à détecter un conflit et ainsi à arrêter la transmission des données.

2. Procédé de commande de flux pour un trafic de données transmis à travers un réseau SDH selon la revendication 1, dans lequel l'étape de création de la trame LFP comprend en outre les étapes suivantes:
dans une direction de liaison montante du dispositif EoS, la partie de désencapsulation du dispositif EoS continue de surveiller le volume de données dans la mémoire cache de trame, si le volume de données dépasse le seuil supérieur, la partie de désencapsulation du dispositif EoS crée périodiquement la trame LFP, dont le champ de commande commande l'arrêt de l'envoi des données; si le volume de données est inférieur au seuil inférieur, la partie de désencapsulation du dispositif EoS crée périodiquement la trame LFP, dont le champ de commande commande le commencement de l'envoi des données; si le volume de données est entre le seuil inférieur et le seuil supérieur, la partie de désencapsulation du dispositif EoS cesse de créer la trame LFP;
la trame LFP est insérée en tête de la file d'attente de données à encapsuler et reçoit la priorité pour l'encapsulation; si aucune trame Ethernet n'est encapsulée, la trame LFP est encapsulée immédiatement; autrement, la trame LFP est encapsulée immédiatement après que les trames Ethernet actuelles ont été encapsulées.

3. Procédé de commande de flux pour un trafic de données transmis à travers un réseau SDH selon la revendication 1 ou 2, dans lequel le support de la trame LFP est configuré en tant que structure de trame PAUSE standard, définie par la norme 802.3x.

4. Procédé de commande de flux pour un trafic de données transmis à travers un réseau SDH selon la revendication 2, dans lequel, si le volume de données dans la mémoire cache de trame dépasse le seuil supérieur, la partie de désencapsulation du dispositif EoS créera périodiquement la trame LFP avec le champ de commande 0X0FFFFH; si le volume de données est inférieur au seuil inférieur, la partie de désencapsulation du dispositif EoS créera périodiquement la trame LFP avec le champ de commande 0X0H; le champ de commande est commandé selon une commande Xon/Xoff.

5. Procédé de commande de flux pour un trafic de données transmis à travers un réseau SDH selon la revendication 1, dans lequel la partie de désencapsulation du dispositif EoS opposé traite la trame LFP en un motif de régénération de trame LFP;
si le champ de commande dans la trame LFP commande l'arrêt de l'envoi des données, une partie d'encapsulation du dispositif EoS opposé cessera de fonctionner, et les données d'une partie d'accès Ethernet du dispositif EoS opposé s'empileront dans la partie d'encapsulation du dispositif EoS opposé et amèneront un dispositif de données d'utilisateur à cesser l'envoi de trames Ethernet selon le protocole de commande de flux Ethernet 802.3x;
si le champ de commande de la trame LFP commande le commencement de l'envoi des données, la partie d'encapsulation du dispositif EoS opposé fonctionnera normalement pour encapsuler les trames Ethernet provenant de la partie d'accès Ethernet du dispositif EoS opposé et les acheminer vers une partie de mappage du dispositif EoS opposé.

6. Procédé de commande de flux pour un trafic de données transmis à travers un réseau SDH selon l'une quelconque des revendications précédentes, dans lequel, lorsque les dispositifs de données d'utilisateur associés au dispositif EoS opposé cessent l'envoi des données au dispositif EoS opposé, le volume de données dans la mémoire cache de trame du dispositif EoS diminue graduellement; lorsque le volume de données atteint le seuil inférieur, la partie de désencapsulation du dispositif EoS génère la trame LFP avec le champ de commande qui commande le commencement de l'envoi des données; la trame LFP reçoit la priorité pour l'envoi à la partie de désencapsulation du dispositif EoS opposé, et est interprétée et exécutée de manière à amener le dispositif de données d'utilisateur associé au dispositif EoS opposé à envoyer de nouveau des données.
